# EUROPÄISCHE PATENTANMELDUNG

(11) **EP 2 527 409 A1**
(43) Veröffentlichungstag der Anmeldung: **28.11.2012**
(21) Anmeldenummer: 12167963.3
(22) Anmeldetag: 15.05.2012
(51) Int. Cl.: C09D 4/00, C08F 2/50

(54) **Verfahren zum Verdrucken von durch Polymerisation härtenden Farben in Flachdruckmaschinen**

(30) Priorität: 24.05.2011 DE 102011102421
(71) Anmelder: Heidelberger Druckmaschinen AG, 69115 Heidelberg (DE)
(72) Erfinder: Beier, Dr., Bernard, 68526 Ladenburg (DE); Schlörholz, Dr., Matthias, 68723 Plankstadt (DE)

(57) **Zusammenfassung**

Die zur Beschleunigung der Aushärtung von polymerisierenden Druckfarben verwendeten Initiatoren werden ganz oder teilweise dem der Druckmaschine zugeführten Feuchtwasser (12) beigemischt. Dazu kann eine Dosiereinheit (100) verwendet werden, die auch die üblichen Feuchtmittelzusätze in das Frischwasser eindosiert. Hierdurch wird die Standzeit der Farben erhöht und das Einbringen von polaren Initiatoren in die Druckfarbe erleichtert.

## Beschreibung

In Druckmaschinen die nach dem Prinzip des sogenannten Flachdrucks arbeiten, also Bogen- oder Rollenoffsetdruckmaschinen werden üblicherweise ölbasierende Druckfarben verwendet, die durch Wegschlagen im Papier und oxidative Trocknung oft erst nach Stunden oder Tagen erst richtig austrocknen. Daneben werden für spezielle Anwendungen im Verpackungsdruck und im Akzidenzdruck insbesondere dann, wenn hohe Glanzgrade erreicht werden sollen, auch sogenannte UV-Farben verdruckt. Das sind Druckfarben, die im Wesentlichen aus Acrylsäureestern bestehen und durch Polymerisation relativ schnell aushärten. Dabei wird die Polymerisation durch die Zugabe von sogenannten Fotoinitiatoren beschleunigt. Hierbei handelt es sich um reaktive niedrigmolekulare Verbindungen wie z. B. Isopropylthioxanthon (ITX), die durch UV-Bestrahlung gespalten werden, so dass mesomeriestabilisierte Radikale entstehen, von denen die Polymerisation der Acrylsäureester gestartet wird. Diese Fotoinitiatoren sind unter verschiedenen Handelsnamen wie z. B. Irgacure 651, Darocure 1173 bekannt und sind den UV-Farben bereits vom Farbenhersteller beigemischt worden. Wenn diese Farben dann in einer Offsetdruckmaschine verdruckt werden, wird üblicherweise in jedem Druckwerk unmittelbar nachdem der bedruckte Bogen den Druckspalt verlässt die Farbe mit Hilfe von intensiven UV-Lichtquellen bestrahlt. Daraufhin setzt sofort die Polymerisation der Acrylsäureester ein, so dass die mit der jeweiligen Farbe bedruckten Bogen bereits weitestgehend trocken sind, bevor sie im nächsten Druckwerk mit einer anderen Farbe bedruckt werden.

Das Drucken mit UV-Farben ist jedoch nicht unproblematisch. Zum einen ist die Standzeit der UV-Farben aufgrund der beigemischten Initiatorsubstanzen begrenzt. Diese sind auch in einem gewissen Ausmaße tageslichtempfindlich, so dass die Polymerisation bereits einsetzen kann, während sich noch unverdruckte Farbe im Farbkasten bzw. im Farbwerk der Druckmaschine befindet.

Des Weiteren werden bei der Polymerisation der UV-Farben nicht alle Initiatoren verbraucht. Diese niedrigmolekularen Verbindungen können anschließend aus der gehärteten Farbschicht heraus migrieren. Da diese hochreaktiven Stoffe auch in kleinen Mengen gesundheitsschädlich sind, stellt die Migration dieser Stoffe z. B. bei Lebensmittelverpackungen ein Problem dar. Dem wird versucht durch Migrationssperren d. h. zusätzliche Folien zu begegnen, die das Eindringen in die Lebensmittel selbst verhindern sollen.

Es ist die Aufgabe der Erfindung ein Verfahren anzugeben, mit dem der Einsatz von durch Polymerisation härtenden Farben im Flachdruck und speziell im Nassoffsetdruck verbessert werden kann. Es ist eine weitere Aufgabe der Erfindung, ein Verfahren anzugeben, mit dem die Herstellung von durch Polymerisation härtendem Druckmedium für das Verdrucken in Druckmaschinen verbessert werden kann, insbesondere soll die Herstellung von Farben für den Flachdruck und speziell für den Nassoffsetdruck verbessert werden.

Diese Aufgaben werden durch Verfahren gemäß der Merkmale der Ansprüche 1 und 13 gelöst.

Die eine Aufgabe wird durch die im Kennzeichen des Anspruchs 1 angegebenen Maßnahmen dadurch gelöst, dass die zur Beschleunigung der Aushärtung der Farben verwendeten Initiatoren ganz oder teilweise dem der Druckmaschine zugeführten Feuchtmittel beigemischt werden.

Da die Initiatoren oder zumindestens ein Teil der Inititatoren und, soweit es sich bei den Initiatoren um ein Mehrkomponentensystem handelt, mindestens eine der Komponenten der Druckmaschine mit dem Feuchtmittel also erst unmittelbar vor dem Drucken zugeführt und in die Druckfarbe einemulgiert werden, können die UV-Farben bedeutend länger bevorratet werden, da sich ihre Standzeit nicht durch einen beigemischten Initiator verkürzt. Hierbei ist es zweckmäßig, wenn die Initiatoren hinsichtlich ihres Löslichkeitsverhaltens in polaren und unpolaren Stoffen d. h. gegenüber dem Feuchtmittel und der Farbe so ausgewählt oder modifiziert werden, dass sie in beiden Stoffklassen löslich bzw. emulgierbar sind. Das lässt sich beispielsweise dadurch erreichen, indem in die Initiatoren entsprechende funktionale Gruppen eingebaut werden, im Falle von Carbonsäuren beispielsweise Ethylenglycol, um die Wasserlöslichkeit zu erhöhen oder Propylenglycol, um die Löslichkeit zu erniedrigen und die Affinität zur Druckfarbe zu erhöhen.Bei geeigneter Wahl der Kettenlänge oder Mischungsverhältnisse der entsprechenden Glykole lässt sich also das Löslichkeits- bzw. das Emuligerverhalten nach Wunsch einstellen und z. B. so modifizieren, dass der Phasenwechsel vom Feuchtmittel in die unpolare UV-Farbmatrix erleichtert wird.

Ohne Einschränkung der Allgemeinheit wird durch die Modifizierung der Initiatoren die Wechselwirkung an die umgebende chemische Matrix, also an den Solvaten, bzw. an die umgebende Lösung oder Emulsion angepasst. Als chemische Matrix sind hier somit insbesondere die Druckfarbe, das Feuchtmitttel oder Mischungen daraus zu verstehen.

Anstelle der oben erwähnten Glykole können auch andere Oligomer-Bildner zu dem beschriebenen Zweck eingesetzt werden, beispielsweise Saccharide. Insofern ist der Begriff "Glykol" im nachfolgenden Beschreibungsteil und in den Patentansprüchen ganz allgemein stellvertretend für Oligomer-Bildner, und schließt u. a. auch die genannten Saccharide ein.

Oligomere sind dabei Moleküle mit sich wiederholenden Gruppen von Atomen oder Atomgruppen, sogenannte Monomereinheiten. Im einfachsten Fall können dies beispielsweise Methylen- oder Ethyleneinheiten sein. So sind z. B. höhere n-Alkancarbonsäuren (z. B. mit n = 6, 8, 10, 14 oder 18 Kohlenstoffatomen) durch Anfügen von mehreren Ethyleneinheiten an eine Essigsäure als Oligoethylencarbonsäuren zu verstehen.

Bei der Kettenbildung der Oligomere ist es denkbar, dass zumindest zwei verschiedene Monomereinheiten miteinander verknüpft werden. Dabei kann die Reihenfolge der Monomereinheiten in der Kette eine regenmäßige Abfolge besitzen, etwa -A-B-A-B- oder -A-A-B-B-, oder die Monomere können in der Oligomerkette statistisch, also ungeordnet verteilt sein, etwa ...-A-A-B-A-B-A-B-B-B-A-B-A-B-...

In gleicher Weise kann die Orientierung der Monomere in der Oligomerkette variieren. So können beispielsweise Monomereinheiten mit einer Doppelbindung in cis- oder trans-Stellung in eine Oligomerkette eingebaut werden. Dies kann wie bei der oben beschriebenen Reihenfolge verschiedener Monomereinheiten ebenfalls regelmäßig oder statistisch geschehen.

Die Anbindung der Oligomere an einen Initiator kann in vielen Fällen an unterschiedliche Postionen erfolgen. Als Beispiel sei hier die Benzoesäure genannt, die mit einem oder mehreren Oligomeren in der ortho-, meta oder para-Stellung verknüpft sein kann.

Kürzlich sind z. B. aus der Dissertation von M. Schmitt "Strahleninduzierte Härtung von auf Acrylsäureestern basierten Druckfarben durch Nanoskalike Metalloxyde", ISBN-Nr. 3838117778, Fotoinitiatoren bekannt geworden, bei denen es sich um Metalloxidpartikel handelt, an die Carbonsäuren gebunden sind. Die Metalloxidpartikel, z. B. Zinkoxid oder Titandioxid besitzen Halbleitereigenschaften, wodurch es möglich ist, durch UV-Strahlung die an die Partikel gebundenen Carbonsäuren durch Abspaltung von Radikalen abzulösen. Einige Fotoinitiatoren diesen Typs lassen sich, abhängig von den Eigenschaften der verwendeten Carbonsäuren, zwar nicht gut in den UV-Farben lösen, besitzen dafür jedoch ein gutes Dispersionsverhalten in polaren Flüssigkeiten wie Ethanol oder Wasser. Sie eignen sich deshalb ganz besonders dazu, gemäß der vorliegenden Erfindung mit dem Feuchtmittel zusammen zum Zeitpunkt der Emulsionsbildung von Farbe und Feuchtmittel zum Druckprozess hinzugefügt zu werden, indem sie dort z. B. von Walzen des Feucht-oder Farbwerks beim Emulgieren des Feuchtmittels in die Druckfarbe, mit eingearbeitet werden. Hierbei fungiert also das Feuchtwasser bzw. Feuchtmittel als Lösungsmittel bzw. Solvatsystem und auf die Verwendung von Ethanol zur Solvatisierung kann verzichtet werden.

Des Weiteren kann es vorteilhaft sein, wenn der Initiator aus einem Zwei-Komponenten-System besteht, dessen eine Komponente über das Feuchtmittel in die Farbe emulgiert wird, während die andere Komponente der UV-Farbe bereits beigemischt ist. Auf diese Weise kommen die beiden Komponenten erst kurz vor dem Druckprozess zusammen und bilden ein Initiatorsystem, das reaktiv ist und entweder direkt nach dem Zusammenbringen die Aushärtung bzw. Polymerisation der Farbe in die Wege leitet oder bei der anschließenden Bestrahlung durch elektromagnetische Strahlung, z. B. UV-Licht, die Polymerisation der Farbe einleitet. Für den Fall des vorstehend geschilderten Systems aus einem halbleitenden Metalloxidpartikel und den Carbonsäuren würde man beispielsweise die Metalloxidpartikel über das Feuchtmittel in die Farbe emulgieren und die Carbonsäuren der Farbe bereits bei deren Herstellung beimischen. Bei dem Emulgieren des Feuchtmittels mit der Farbe wird dann die Carbonsäure von der Metallpartikeloberfläche adsorbiert und kann anschließend bei UV-Bestrahlung z. B. die sogenannte Photo-Kolbe-Reaktion in CO₂ und einen radikalischen Rest gespalten werden, der dann die Polymerisation der Acrylsäureester der UV-Farbe einleitet.

Es ist weiterhin zweckmäßig, wenn durch geeignete Wahl der Bestandteile der Farbe und der Carbonsäuren dafür Sorge getragen wird, dass nicht partikelgebundene Carbonsäuren als Monomer in die Farbmatrix einpolymerisiert werden, z. B. durch Aufbrechen entsprechender Doppelbindungen der Carbonsäuren und Reaktionen mit den Doppelbindungen der Farbmoleküle. Auf diese Weise wird erreicht, dass Anteile der Carbonsäure, die nicht an die Metalloxidpartikel gebunden sind, stattdessen mit der Farbe vernetzen und so nicht mehr aus der Farbe hinausmigrieren können.

Anstelle der Carbonsäuren können auch andere organische Säuren zu dem beschriebenen Zweck eingesetzt werden, beispielsweise organische Stickstoffsäuren. Insofern ist der Begriff "Carbonsäuren" im nachfolgenden Beschreibungsteil und in den Patentansprüchen ganz allgemein stellvertretend für organische Säuren verwendet, die bei Bestrahlung mit Licht oder UV-Strahlung Molekülteile abspalten können, und schließt u. a. auch die genannten organischen Stickstoffsäuren ein.

Die weitere Aufgabe wird durch die im Kennzeichen des Anspruchs 13 angegebenen Maßnahmen dadurch gelöst, dass die zur Beschleunigung der Aushärtung der Farben oder Toner (110) verwendeten Initiatoren in eine chemische Matrix eingearbeitete Metalloxidpartikel sind, dass die Affinität der Metalloxidpartikel zur umgebenden, chemischen Matrix durch die Anzahl der Monomereinheiten in den Oligomeren angepasst wird.

Eine vorteilhafte Weiterbildung kann ein Verfahren sein, bei dem die Anzahl der Monomereinheiten in einem Oligomer 1 bis 100, vorzugsweise 1 bis 20 beträgt.

Eine weitere vorteilhafte Weiterbildung kann ein Verfahren sein, bei dem die Oligomere aus unterschiedlichen Monomereinheiten aufgebaut sind und die Verteilung der Monomereinheiten statistisch oder geordnet ist.

Eine weitere vorteilhafte Weiterbildung kann ein Verfahren sein, bei dem die Reihenfolge und/oder die Orientierung der Monomereinheiten variiert.

Eine weitere vorteilhafte Weiterbildung kann ein Verfahren sein, bei dem die Anbindungsposition der Oligomere an die Carbonsäuren variiert.

Eine weitere vorteilhafte Weiterbildung kann ein Verfahren sein, bei dem die durchschnittliche Anzahl der Carbosäuren pro Flächeneinheit der Metalloxid-Oberfläche variiert.

Eine weitere vorteilhafte Weiterbildung kann ein Verfahren sein, bei dem die Monomere geeignete funktionelle Gruppen besitzen, die mit Bestandteilen der chemischen Matrix chemische Bindungen eingehen.

Eine weitere vorteilhafte Weiterbildung kann ein Verfahren sein, bei dem die Monomere zumindest eine polymerisierbare Doppelbindung enthalten.

Eine weitere vorteilhafte Weiterbildung kann ein Verfahren sein, bei dem eine oder mehrere zur chemischen Bindung zwischen den Monomeren und der chemischen Matrix führende Reaktionen durch Zuführung von thermischer Energie und/oder Bestrahlung mit elektromagnetischen Wellen und/oder durch Zugabe eines Aktivators ausgelöst werden.

Eine weitere vorteilhafte Weiterbildung kann ein Verfahren sein, bei dem die die bindungsfähige funktionelle Gruppe tragende Carbonsäure eine oder mehrere Carbonsäure-Funktionen enthält.

Eine weitere vorteilhafte Weiterbildung kann ein Verfahren sein, bei dem an das Metalloxidpartikel unterschiedliche Carbonsäuren gebunden sind und/oder die bindungsfähigen funktionellen Gruppen an eine oder mehrere ausgewählte Carbonsäuren aus der Gruppe der unterschiedlichen Carbonsäuren gebunden sind.

Eine weitere vorteilhafte Weiterbildung kann ein Verfahren sein, bei dem das Druckmedium Farbe, Lack, Tinte, Trockentoner oder Flüssigtoner ist.

Eine weitere vorteilhafte Weiterbildung kann ein erfindungsgmäßes Verfahren zum Verdrucken von durch Polymerisation härtenden Farben in Flachdruckmaschinen sein, bei dem erfindungsgemäß hergestellte Farben eingesetzt werden.

Weitere Vorteile der Erfindung ergeben sich aus der nachfolgenden Beschreibung von Ausführungsbeispielen anhand der beigefügten Zeichnungen.

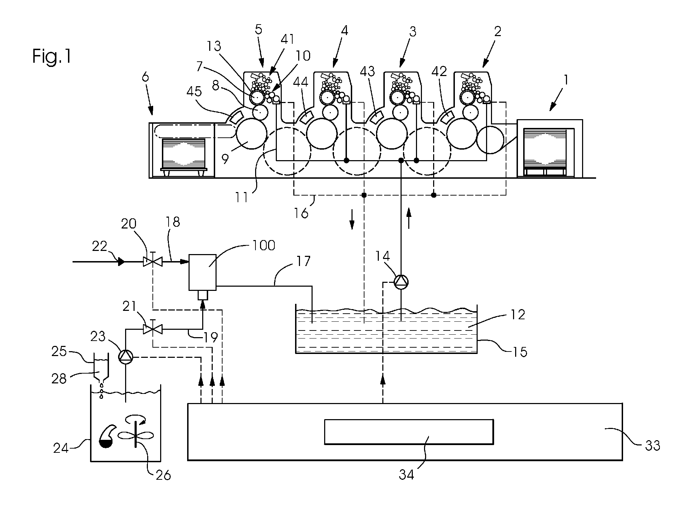

In der Figur 1 ist sehr schematisch eine Bogenoffsetdruckmaschine mit einer an sie angeschlossenen Anlage zum Aufbereiten von Feuchtmittel dargestellt.

Die Bogenoffsetdruckmaschine besteht aus einem Anleger 1, vier Druckwerken 2 bis 5 und einem Ausleger 6. In jedem Druckwerk 2 bis 5 befinden sich ein Plattenzylinder 7, ein Übertragungszylinder 8 und ein Druckzylinder 9. Jedem Plattenzylinder 7 ist ein Feuchtwerk 10 zugeordnet. Zu den Feuchtwerken 10 führen Vorlaufleitungen 11 für das Feuchtmittel 12. Die Feuchtwerke 10 dienen dazu, die nicht druckenden Bereiche der auf den Plattenzylindern 7 aufgespannten Druckformen 13 mit Feuchtmittel 12 zu benetzen. Sie stehen über Zwischenwalzen mit den Farbwerken 41 in den Druckwerken 2 bis 5 in Kontakt, die das Feuchtmittel 12 in die Druckfarbe einemulgieren. Das Feuchtmittel 12 wird mit einer Pumpe 14 aus einem Behälter 15 zu den Feuchtwerken 10 gefördert. Beim Drucken nicht verbrauchtes Feuchtmittel 12 gelangt von den Feuchtwerken 10 über Rücklaufleitungen 16 zurück in den Behälter 15.

Verbrauchtes Feuchtmittel 12 wird über eine Leitung 17 nachgefüllt. In diese Leitung 17 ist ein Dosiergerät 100 für die Zugabe von Feuchtmittelzusätzen eingesetzt. Die Frischwasserleitung zu dem Dosiergerät 100 ist mit 18 bezeichnet und die Leitung für die Feuchtmittelzusätze mit 19. In den Leitungen 18, 19 befinden sich steuerbare Ventile 20, 21. Das Ventil 20 steuert den Frischwasserzufluss und ist mit einem entsprechenden Frischwasseranschluss 22 verbunden. Das Ventil 21 ist mit einer Pumpe 23 verbunden, die Feuchtmittelzusätze aus einem Behälter 24 fördert.

Bei diesen Feuchtmittelzusätzen handelt es sich beispielsweise um Isopropylalkohol oder im Falle des alkohohlfreien Druckens um Alkoholersatzstoffe, von denen die Oberflächenspannung des Frischwassers herabgesetzt, sowie Stoffe, mit denen der pH-Wert eingestellt und gegebenenfalls die Härte des Feuchtmittels beeinflusst wird. Zusätzlich ist über dem Behälter 24 eine Dosiereinrichtung 25 vorgesehen, über die Initiatoren 28 den Alkoholzusatzstoffen im Behälter 24 beigegeben werden können, wobei ein Rührgerät 26 im Behälter 24 die Alkoholzusatzstoffe und die Initiatoren miteinander verrührt. Über die Pumpe 23 und das Ventil 21 gelangen deshalb auch die Initiatoren in das Dosiergerät 100 und werden von dem über die Leitung 17 in den Vorratsbehälter 15 des Feuchtmittels eindosiert.

Gesteuert wird die vorstehend beschriebene Feuchtmittelaufbereitungsanlage von einer Steuerung 33, die mit den Pumpen und Ventilen der Anlage verbunden ist und einen Steuerrechner 34 besitzt, der wiederum mit der hier nicht näher dargestellten Maschinensteuerung der Druckmaschine kommuniziert.

Im beschriebenen Ausführungsbeispiel handelt es sich bei den Initiatoren 28 um nanopartikuläre Metalloxidteilchen aus Titandioxid oder Zinkoxyd (ZnO), an deren Oberfläche Carbonsäuren, beispielsweise modifizierte Essigsäure- oder Ameisensäuremoleküle, gebunden sind. Diese Nanopartikel sind im Feuchtmittel 12 des Vorratsbehälters 15 solvatisiert und werden über die Pumpe 14 mit dem Feuchtmittel den Feuchtwerken 10 der Druckmaschine zugeführt. Dort werden sie wie schon erwähnt über Zwischenwalzen in die von den Farbwerken 41 zu den Druckformen 13 auf den Plattenzylindern 7 zugeführten Druckfarbe emulgiert. Entsprechend besitzt die Farbe im Druckbild der durch die Druckmaschine hindurchlaufenden Papierbögen die beschriebenen Fotoinitiatoren und kann von den Zwischendecktrocknern 42 bis 45 an jedem Druckwerk durch UV-Strahlung gehärtet werden, sobald die mit der jeweiligen Farbe bedruckten Bögen den Druckspalt zwischen den Übertragungszylindern 8 und den Gegendruckzylindern 9 verlassen.

Das nächste Ausführungsbeispiel wird anhand der detaillierteren Skizze des Farbwerks 41 und des Feuchtwerks 10 aus Figur 1, in vergrößertem Maßstab dargestellt, näher erläutert.

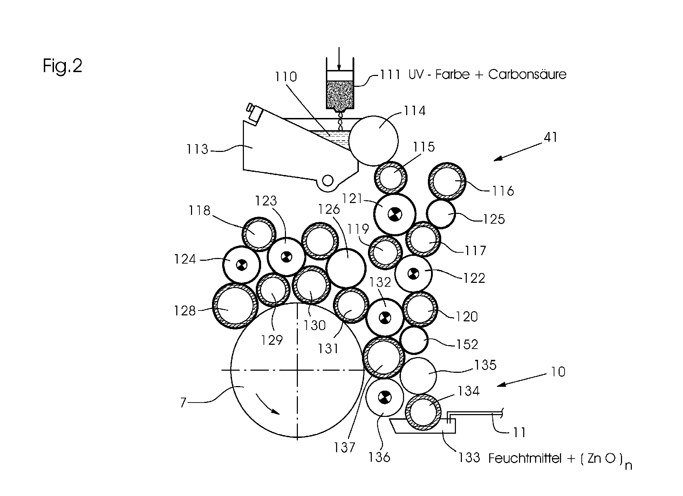

Das in Figur 2 gezeigte Farbwerk 41 besitzt einen Messerfarbkasten 113, dessen Farbvorrat 110 von einer Dosierpatrone 111 laufend aufgefüllt wird, sowie folgende Walzen: eine Duktorwalze 114, vier Farbauftragswalzen 128, 129, 130 und 131, mit denen die Druckplatte auf dem Zylinder 7 eingefärbt wird, und eine Reihe weiterer Walzen 115 bis 127, von denen die Farbe vom Duktor 114 abgenommen, verteilt und verrieben und sodann von der zentralen Walze 120 ausgehend den Auftragswalzen 128 bis 131 zugeführt wird. Mit 115 ist der taktweise zwischen dem Duktor 114 und der Walze 121 pendelnde Farbheber bezeichnet. Bei den Walzen 121, 122, 123 und 124 handelt es sich um traversierende Reiberwalzen, wobei die Reiber 123 und 124 gekühlt sind. Der Duktor 115 sowie die Walzen 116, 117, 118, 119, 120, 127 sind ebenso wie die vier Farbauftragswalzen 128 bis 131 mit einem elastischen Mantel aus einem gegenüber den verwendeten UV-Farben aus Acrylharz beständigem Material versehen, während die Brückenwalze 132, die zwischen der Feuchtauftragswalze 137 und der ersten Farbauftragswalze 128 angeordnet ist, ebenso wie die Walzen 126 und 125 Stahlwalzen sind.

Das Feuchtwerk besteht aus einem Wasserkasten 133, einer Tauchwalze 134, einer Dosierwalze 135, einer Feuchtreiberwalze 136, einer Feuchtmittelauftragwalze 137 und einer Brückenwalze 152, die ebenso wie die Brückenwalze 132 das Feuchtwerk mit dem Farbwerk verbindet. An den Stellen der Walzen 132 und 152, insbesondere durch die traversierende Reiberbewegung der Walze 132, wird das aus dem Wasserkasten 133 geförderte Feuchtmittel in die über die zentrale Walze 120 einlaufende UV-Farbe einemulgiert.

In dem hier beschriebenen Ausführungsbeispiel liegen die Initiatoren für den Start der Vernetzung bzw. der Polymerisation der UV-Farben als Zwei-Komponenten-System vor. Die erste Komponente bilden Nanoteilchen aus Zinkoxid, die ähnlich wie im Ausführungsbeispiel nach Figur 1 beschrieben dem Feuchtmittel/Feuchtmittel zugemischt wurden und über die entsprechende Zuleitung 11 in den Wasserkasten 133 des Feuchtwerks 10 gelangen. Die zweite Komponente bilden Carbonsäuren, wie z. B. Benzoylameisensäure, die bereits vom Farbenhersteller werkseitig mit der UV-Farbe vermischt in die Farbkartusche 111 eingefüllt wurden.

Im Bereich der Walzen 120/132/152/137, wo das Feuchtmittel mit der Farbe emulgiert wird, finden beide Komponenten zueinander und die Carbonsäuren gelangen an die Oberfläche der Metalloxidteilchen, wo sie adsorbiert werden. Dadurch entsteht ein System aus jetzt aktiven Fotoinitiatoren, die nach dem Verdrucken der UV-Farbe in einem der Druckwerke der Druckmaschine durch die intensive UV-Strahlung der Trockner 42 - 45 direkt nach dem Druckspalt u. a. über eine sogenannte Photo-Kolbe-Reaktion zerfallen. Hierbei entsteht aus den an die Metalloxidteilchen gebundenen Carbonsäuren zum einen CO₂, das als Gas entweicht, als auch ein radikalischer Molekülrest °R, durch den unmittelbar die polymerisierende Kettenreaktion eingeleitet wird, durch welche die UV-Farbe vernetzt.

Unter bestimmten Nebenbedingungen ist es auch möglich, die nanoskaligen Zinkoxidteilchen der UV-Farbe herstellerseitig zuzumischen und stattdessen die Carbonsäure, z. B. Benzoylameisensäure, über das Feuchtmittel zuzuführen. Hierbei ist jedoch Sorge zu tragen, dass der pH-Wert und die Härte des Feuchtmittels in dem für den Druckprozess tolerablen Bereichen bleiben bzw. eingestellt werden. Das kann beispielsweise durch Zugabe von Pufferlösungen zum Feuchtmittel, u. a. über die in Figur 1 dargestellte Dosiereinheit 100, erfolgen.

### Bezugszeichenliste

- 1: Anleger
- 2-5: Druckwerk
- 6: Ausleger
- 7: Plattenzylinder
- 8: Übertragungszylinder
- 9: Gegendruckzylinder
- 10: Feuchtwerk
- 11: Vorlaufleitung
- 12: Feuchtmittel
- 13: Druckform
- 14: Pumpe
- 15: Vorratsbehälter
- 16: Rücklaufleitung
- 17 - 19: Leitung
- 20,21: Ventil
- 22: Frischwasseranschluss
- 23: Pumpe
- 24: Behälter
- 25: Dosiereinrichtung
- 26: Rührgerät
- 28: Initiator
- 33: Steuerung
- 34: Steuerrechner
- 41: Farbwerk
- 42 - 45: Zwischendecktrockner
- 100: Dosiergerät
- 110: Farbvorrat
- 111: Dosierpatrone
- 113: Messerfarbkasten
- 114: Duktorwalze
- 115: Farbheber
- 116 - 120, 127: Walze
- 121 - 124: Reiberwalze
- 125 - 126: Stahlwalze
- 128 - 131: Farbauftragwalze
- 132: Brückenwalze (Reiberwalze)
- 133: Wasserkasten
- 134: Tauchwalze
- 135: Dosierwalze
- 136: Feuchtreiberwalze
- 137: Feuchtmittelauftragwalze
- 152: Brückenwalze

## Patentansprüche

1. Verfahren zum Verdrucken von durch Polymerisation härtenden Farben in Flachdruckmaschinen,
**dadurch gekennzeichnet,**
**dass** die zur Beschleunigung der Aushärtung der Farben (110) verwendeten Initiatoren ganz oder teilweise den der Druckmaschine zugeführten Feuchtmittel (12) beigemischt werden.

2. Verfahren nach Anspruch 1,
wobei die Initiatoren mit dem Feuchtmittel (12) über Walzen (120/152/132/137) des Farbwerks (41) und/oder Feuchtwerks (10) der Druckmaschine während des Druckens in die Druckfarbe (110) einemulgiert werden.

3. Verfahren nach Anspruch 2,
**dadurch gekennzeichnet,**
**dass** die Initiatoren hinsichtlich ihres Löslichkeitsverhaltens in polaren und unpolaren Stoffen so ausgewählt oder modifiziert werden, dass sie in beiden Stoffklassen löslich bzw. emulgierbar sind.

4. Verfahren nach Anspruch 3,
wobei die Initiatoren so ausgebildet oder modifiziert werden, dass sie eine höhere Affinität zu der Druckfarbe (110) als zum Feuchtmittel (12) besitzen.

5. Verfahren nach einem der Ansprüche 1 bis 4,
wobei es sich bei den Initiatoren um Metalloxidpartikel handelt, an die Carbonsäuren gebunden sind.

6. Verfahren nach Anspruch 5,
wobei die Affinität der Initiatoren durch den Anteil oder die Länge der Kohlestoffketten von an die Carbonsäuren gebundenen Glykolen eingestellt wird.

7. Verfahren nach Anspruch 1,
wobei der verwendete Initiator ein Mehrkomponentensystem ist und mindestens eine der Komponenten dem Feuchtmittel (12) beigemischt wird.

8. Verfahren nach Anspruch 7,
wobei der Initiator aus zwei Komponenten besteht, von denen eine bereits der Farbe (110) beigemischt ist und die andere über das Feuchtmittel (12) während des Druckens in die Farbe eingetragen wird.

9. Verfahren nach Anspruch 5 und 8,
wobei die Metalloxidpartikel dem Feuchtmittel (12) und die Carbonsäuren der Druckfarbe (110) beigemischt werden.

10. Verfahren nach Anspruch 5 und 8,
wobei die Metalloxidpartikel der Druckfarbe (110) und die Carbonsäuren dem Feuchtmittel (12) beigemischt werden.

11. Verfahren nach einem der Ansprüche 1 bis 9,
wobei die Initiatoren Fotoinitiatoren sind, die durch elektromagnetische Strahlung aktiviert werden.

12. Verfahren nach Anspruch 5,
wobei die Carbonsäure(n) Doppelbindungen und/oder geeignete funktionelle Gruppen besitzen, die mit den Bestandteilen der Druckfarbe chemische Bindungen eingehen können.

13. Verfahren zum Herstellen von durch Polymerisation härtendem Druckmedium für das Verdrucken in Druckmaschinen, wobei
- die zur Beschleunigung der Aushärtung des Druckmediums (110) verwendeten Initiatoren in eine chemische Matrix eingearbeitete Metalloxidpartikel sind,
- an die Metalloxidpartikel Carbonsäuren gebunden sind, und
- die Carbonsäuren ein oder mehrere Oligomere besitzen,
**dadurch gekennzeichnet,**
**dass** die Affinität der Metalloxidpartikel zur umgebenden, chemischen Matrix durch die Anzahl der Monomereinheiten in den Oligomeren angepasst wird.

14. Verfahren an Anspruch 13,
wobei die Anzahl der Monomereinheiten in einem Oligomer 1 bis 100, vorzugsweise 1 bis 20 beträgt.

15. Verfahren nach Anspruch 13 oder 14,
wobei die Oligomere aus unterschiedlichen Monomereinheiten aufgebaut sind und die Verteilung der Monomereinheiten statistisch oder geordnet ist.

16. Verfahren nach Anspruch 15,
wobei die Reihenfolge und/oder die Orientierung der Monomereinheiten variiert.

17. Verfahren nach einem der Ansprüche 13 bis 16,
wobei die Anbindungsposition der Oligomere an die Carbonsäuren variiert.

18. Verfahren nach einem der Ansprüche 13 bis 17,
wobei die durchschnittliche Anzahl der Carbosäuren pro Flächeneinheit der Metalloxid-Oberfläche variiert, so dass z. B. >80% oder < 20% der theoretisch besetzbaren Positionen mit Carbonsäuren besetzt sind..

19. Verfahren nach Anspruch 13 bis 18,
wobei die Monomere geeignete funktionelle Gruppen, etwa Acrylgruppen besitzen, die mit Bestandteilen der chemischen Matrix chemische Bindungen eingehen.

20. Verfahren nach Anspruch 19,
wobei die Monomere zumindest eine polymerisierbare Doppelbindung enthalten.

21. Verfahren nach Anspruch 19 oder 20,
wobei eine oder mehrere zur chemischen Bindung zwischen den Monomeren und der chemischen Matrix führende Reaktionen durch Zuführung von thermischer Energie und/oder Bestrahlung mit elektromagnetischen Wellen und/oder durch Zugabe eines Aktivators ausgelöst werden.

22. Verfahren nach Anspruch 19,
wobei die die bindungsfähige funktionelle Gruppe tragende Carbonsäure eine oder mehrere Carbonsäure-Funktionen enthält.

23. Verfahren nach Anspruch 19,
wobei an das Metalloxidpartikel unterschiedliche Carbonsäuren gebunden sind und/oder die bindungsfähigen funktionellen Gruppen an eine oder mehrere ausgewählte Carbonsäuren aus der Gruppe der unterschiedlichen Carbonsäuren gebunden sind.

24. Verfahren nach einem der Ansprüche 13 bis 23,
wobei das Druckmedium Farbe, Lack, Tinte, Trockentoner oder Flüssigtoner ist.

25. Verfahren zum Verdrucken von durch Polymerisation härtenden Farben in Flachdruckmaschinen nach einem der Ansprüche 1 bis 12,
**dadurch gekennzeichnet,**
**dass** dabei Farben (110) eingesetzt werden, die nach einem der Ansprüche 13 bis 23 hergestellt sind.
